(19) Europäisches Patentamt
European Patent Office
Office européen des brevets

(11) Veröffentlichungsnummer: **0 446 732 A2**

(12) # EUROPÄISCHE PATENTANMELDUNG

(21) Anmeldenummer: **91103157.3**

(22) Anmeldetag: **02.03.91**

(51) Int. Cl.5: **C09B 67/54**, //C09B67/26

(30) Priorität: **15.03.90 DE 4008262**

(43) Veröffentlichungstag der Anmeldung:
**18.09.91 Patentblatt 91/38**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Michna, Martin, Dr.**
**Ostring 39**
**W-5024 Pulheim(DE)**
Erfinder: **Zillger, Werner**
**Am Burghart 15**
**W-5202 Hennef-Stein(DE)**
Erfinder: **Tegtmeyer, Dietrich, Dr.**
**Gerstenkamp 19**
**W-5000 Köln 80(DE)**

(54) **Verfahren zur Herstellung lagerstabiler Farbstofflösungen.**

(57) Durch den Zusatz von Borsäure oder Borsäuresalzen vor oder während der Druckpermeation von anionischen Farbstoff-Lösungen wird die Filtrationsstromdichte erheblich erhöht, so daß man durch die kürzere Belegzeit der Anlage zu einem kostengünstigen Verfahren kommt.

EP 0 446 732 A2

Die vorliegende Erfindung betrifft ein Verfahren zur Herstellung von hochkonzentrierten, wäßrigen Lösungen von anionischen Farbstoffen, insbesondere Reaktivfarbstoffen. Um stabile konzentrierte, wäßrige Lösungen von Farbstoffen und Weißtönern zu erhalten, muß häufig der Gehalt an Salzen, wie er sich durch die Synthese und Isolierung ergibt, stark vermindert werden. Technisch geschieht dies überwiegend durch die Druckpermeation, wobei zunächst entsalzt wird, indem salzhaltiges Permeat durch eine teildurchlässige Membran ausgeschleust und durch entionisiertes Wasser ersetzt wird. In vielen Fällen wird noch ein Aufkonzentrationsschritt angeschlossen, wobei nur Permeat ausgeschleust, aber kein Wasser zugesetzt wird.

Für eine weitgehende Entsalzung ist bei technischen Prozesen ein 1- bis 4-facher Austausch des ursprünglichen Wasservolumens erforderlich.

Die Kosten für diesen Verfahrensschritt hängen im Wesentlichen von der Verweilzeit in der Druckpermeationsanlage ab. Diese wird bestimmt von der Wassermenge, der Membranfläche und der Filtrationsstromdichte. Bei einer gegebenen Anlage und unter Berücksichtigung der Tatsache, daß wegen der Fließfähigkeit der Lösung oder Suspension eine Mindestmenge an Wasser erforderlich ist, hängt die Wirtschaftlichkeit entscheidend von der Filtrationsstromdichte ab. Je höher die Filtrationsdichte, desto niedriger sind die Kosten.

Es wurde überraschenderweise gefunden, daß man durch Zusatz von Borsäure oder deren Salze vor oder während der Entsalzung die Filtrationsstromdichte erhöhen kann.

Bei einer eventuell anschließend vorgenommenen Aufkonzentration wird dann ebenfalls eine erhöhte Filtrationsstromdichte gefunden.

Gegenstand der Erfindung ist somit ein Verfahren zur Herstellung von lagerstabilen, wäßrigen Lösungen von anionischen Farbstoffen, vorzugsweise Reaktivfarbstoffen durch Druckpermeation von Lösungen oder Suspensionen des Rohfarbstoffs, dadurch gekennzeichnet, daß die Lösung oder Suspension vor oder während der Druckpermeation, die die Schritte Entsalzung und gegebenenfalls Aufkonzentration umfaßt, mit Borsäure oder deren Salzen versetzt wird.

Der nach diesem Verfahren erzielbare Effekt ist deshalb überraschend, weil der Zusatz von Elektrolyten normalerweise auf die Filtrationsstromdichte keinen oder einen erniedrigenden Einfluß hat.

Neben Borsäure eignen sich Salze der Borsäure, wie die Alkali-, Erdalkali- und Ammoniumsalze, sowie Trialkylammoniumsalze deren Kation der Formel

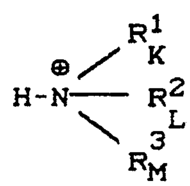

entspricht, wobei

$R^1$ = $C_1$-$C_4$-Alkyl
$R^2$ = $-(CH_2-CH_2-O)_nH$
$R^3$ =

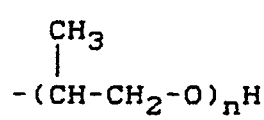

oder

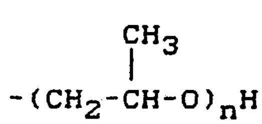

K = 0 bis 2
L = 0 bis 3

M = 0 bis 3

K + L + M = 3

n = 1 bis 4

Die Borsäure bzw. deren Salze liegen in den Ausgangslösungen vor der Druckpermeation in Konzentrationen zwischen 0,01 bis 10 Gew.-%, bevorzugt jedoch zwischen 0,3 und 3 Gew.-%, vor.

Bei der praktischen Durchführung des Verfahrens geht man so vor, daß man die nach der Synthese vorliegende und schon Salze enthaltende Reaktionssuspension mit z.B. Lithium-Salzen in fester Form oder als konzentrierte Lösung versetzt, so daß sich die für eine Lösung des Farbstoffs erforderliche Konzentration des betreffenden Salzes ergibt.

Bevorzugte Lithium-Salze sind $Li_2CO_3$, $LiHCO_3$, $LiNO_3$, Li-Citrat. Auch LiOH ist geeignet.

Die Borsäure(salze) kann man auch kontinuierlich während der Druckpermeation zusetzen, so daß die erforderliche Konzentration dabei nicht verändert wird.

Geeignete Farbstoffe, die zu lagerstabilen Lösungen verarbeitet werden sollen, sind anionische Farbstoffe insbesondere aber Reaktivfarbstoffe. Als Reaktivfarbstoffe kommen auch solche mit zwei oder mehreren gleichen oder verschiedenen Reaktivgruppen in Frage.

Die Reaktivfarbstoffe können den verschiedensten Klassen angehören, z.B. der Reihe der metallfreien oder metallhaltigen Mono- oder Polyazofarbstoffe, metallfreien oder metallhaltigen Azaporphinfarbstoffe wie Kupfer-, Kobalt-, oder Nickelphthalocyaninfarbstoffe, der Anthrachinon-, Oxazin-, Dioxazin-, Triphenylmethan, Nitro-, Azomethin-, metallfreie oder metallhaltigen Formazanfarbstoffe.

Unter dem Begriff "Farbstoff" sollen im Rahmen dieser Erfindung im übrigen auch anionische Weißtöner verstanden werden.

Für die druckbetriebenen Membrantrennprozesse des erfindungsgemäßen Verfahrens können prinzipiell symmetrische, asymmetrische, und Compositemembranen mit semipermeablen Eigenschaften Verwendung finden, Sie können sowohl aus organischen, als auch aus anorganischen Materialien bestehen.

Organische Materialien sind bevorzugt: Polyvinylidenfluorid, Celluloseacetat, Polytetrafluorethen, Polyacrylnitril, Polyethylenimin, Copolymerisate aus Polyacrylnitril und Vinylpyrrolidon, Polysulfon, Polyamid, Polyhydantioin oder auch hydrophilierte Polyolefine, z.B. auf Basis von Polypropylen. Ebenfalls geeignet sind physikochemisch oder chemisch modifizierte Membranen wie z.B. modifizierte Polyacrylnitrilmembranen (vgl. z.B. EP-A-25 973), die beispielsweise erhalten werden durch Umsetzung des Basispolymers mit Hydroxylamin, einer polyfunktionellen, niedermolekularen Verbindung, einem reaktive Gruppen enthaltenden Polymer und einer ionischen Verbindung, die mit dem Polymer eine chemische Bindung umgehen kann, und anschließend mit Aktivchlor, z.B. in Form einer Hypochloridlösung behandelt wird,

Anorganische Membranen sind solche aus porösem Metall bzw. Metallegierungen - (sogenannte Metallsintermembranen z.B. aus porösem Stahl) oder solche aus porösem Kohlenstoff, deren Oberfläche z.B. mit einer dünnen Schicht aus Zirkondioxid, Silicium- oder Aluminiumoxid belegt sein kann, oder weiterhin solche aus porösem Glas oder Keramik.

Vorzugsweise werden zur Durchführung des erfindungsgemäßen Verfahrens die Lösungen einer Druckpermeation an asymmetrischen Membranen oder Compositemembranen unterworfen, wobei salzhaltiges Permeat ausgeschleust und gegebenenfalls ganz oder teilweise durch entionisiertes Wasser ersetzt wird.

Vorzugsweise wird die Druckpermeation, also Reversosmose und Ultrafiltration, angewendet, bei der der Durchtritt von Wasser und evtl. gelösten Stoffen durch die semipermeable Membrane unter der treibenden Kraft eines den osmotischen Druck übersteigenden hydrostatischen Druckes stattfindet.

Die Druckpermeation für das erfindungsgemäße Verfahren läßt sich auf allen handelsüblichen Druckpermeationsgeräten durchführen. Solche Geräte können z.B. als Platten-Rahmen-, Rohr-, Schlauch-, Hohlfaser oder Hohlfeinfasermodul ausgebildet sein. Die oben aufgeführten, erfindungsgemäß verwendbaren Membranen können in die genannten Module eingebaut werden.

Die nach dem erfindungsgemäßen Verfahren hergestellten Lösungen können nach Zusatz eines Puffers und gegebenenfalls eines oder mehreren wassermischbaren organischen Lösungsmittels oder Lösevermittlers verwendet werden.

Geeignete Mittel sind beispielsweise offenkettige oder cyclische Amide, Harnstoffe, Sulfone und Sulfoxide, ein- und mehrwertige Alkohole sowie deren Ether, Polyether und daraus abgeleitete Ester sowie Dicyandiamid. Gegebenenfalls können diese Mittel auch vor der Druckpermeation zugesetzt werden. Ein Teil der Zusätze geht dann allerdings bei der Druckpermeation in das Permeat.

Man erhält so lagerstabile Lösungen mit 10 - 30 Gew.-% Farbstoffgehalt , die sich hervorragend eignen zum Färben von flächenförmigen Gebilden, überwiegend textilen Substraten.

Die nach dem erfindungsgemäßen Verfahren hergestellten Lösungen können aber auch gegebenenfalls nach Zusatz von Puffern und geeigneten Stellmitteln durch Sprühtrocknung oder andere Trocknungsverfahren zu festen Formierungen aufgearbeitet werden. Gegebenenfalls können Puffer und Stellmittel auch nach

der Trocknung zugesetzt werden.

## Beispiele

### Beispiel 1

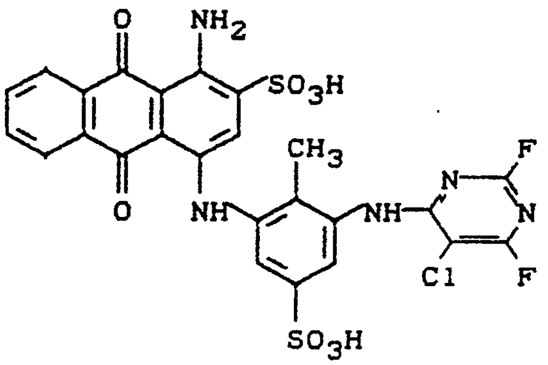

(I)

(als Na-Salz)

935 kg Kondensationsbrühe des Farbstoffs der Formel (I) und 10 kg Borsäure werden in 1.065 kg $LiHCO_3$ (4 %) bei einer Temperatur von ~35 °C gelöst. Die Lösung enthält dann $LiHCO_3$, Prozeßsalze und 7,56 % Reinfarbe.

Diese Lösung wird bei einer Temperatur von ca. 30 - 35 °C, einem pH von 6 und einem Druck von 40 bar auf einem Platten-Rahmen-Modul (mit Polysulfonmembran) entsalzt. Hierzu werden 4.000 kg salzhaltiges Permeat kontinuierlich durch 4.000 kg entmineralisiertes Wasser ersetzt und anschließend durch Entfernen von 1.118,4 kg salzhaltigem Permeat aufkonzentriert. 881,6 kg Konzentrat werden mit 100,8 kg ε-Caprolactam und 20,2 kg entmineralisiertem Wasser versetzt und mit 5 kg Borsäure gepuffert.

Man erhält eine niedrig viskose, lagerstabile Flüssigeinstellung des Farbstoffs der Formel (I) mit 15 %. Reinfarbe, 10 %. ε-Caprolactam, 0,5 % Borsäure und Wasser ad 100 %.

Der pH der Einstellung beträgt 7,5; Cl-Gehalt: <0,05 %. Farbstoffverlust im Permeat: <0,05 %. Die Filtrationsstromdichte

$$\left[ J = \frac{kg}{m^2 \cdot d} \right] \text{ war bei}$$

diesem Beispiel erheblich größer als beim gleichen Beispiel ohne Zusatz von Borsäure vor der Druckpermeation.

### Beispiel 2

113,4 kg Reaktionsbrühe, des Farbstoffs der Formel

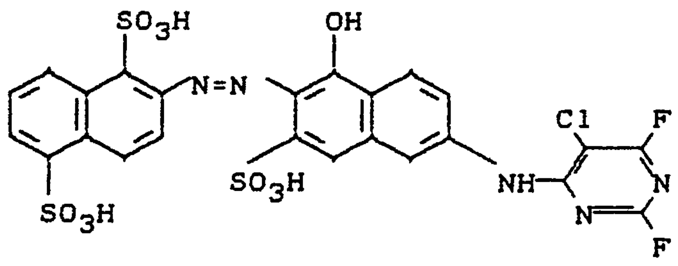

(II)

(als Na-Salz)

und 1,1 kg Borsäure werden in 113,4 kg $LiHCO_3$-Lösung (4 %ig) bei einer Temperatur von ca. 45° gelöst. Die Lösung enthält dann neben Borsäure, $LiHCO_3$ und Prozeßsalze 8,1 % Reinfarbe.

Diese Lösung wird bei einer Temperatur von ca. 40-45° C und einen pH-Wert von 7,5 und einem Druck von 40 bar auf einem Platten-Rahmen-Modul entsalzt. Hierbei werden 788,7 kg salzhaltiges Permeat kontinuierlich durch 788,7 kg entmineralisiertes Wasser ersetzt und anschließend durch Entfernen von 133,9 kg salzhaltigem Permeat aufkonzentriert. Als Membran wird eine handelsübliche Composite-Membran (Trägerschicht: Polysulfon, Membranschicht: Polyamid) verwendet.

94 kg Konzentrat werden mit 2 kg Dicyandiamid und 3,5 kg entmineralisiertem Wasser versetzt und mit 0,5 kg Borsäure gepuffert.

Man erhält eine niedrig viskose, lagerstabile Flüssigeinstellung des Farbstoffs der Formel (II) mit ca. 21 % Reinfarbe, 2 % Dicyandiamid, 0,5 % Borsäure und Wasser ad 100 %. Der pH-Wert der Einstellung beträgt 7,5; Cl-Gehalt: $<$0,05 %.

Die Filtrationsstromdichte

$$\left[ J = \frac{kg}{m^2 \cdot d} \right] \text{ war bei}$$

diesem Beispiel erheblich größer als beim gleichen Beispiel ohne Zusatz von Borsäure vor oder während der Druckpermeation.

Beispiel 3

53,3 kg Reaktionsbrühe des Farbstoffs der Formel

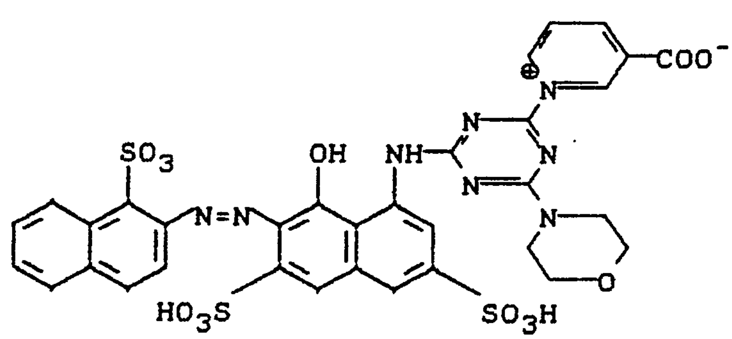

(III)

(als Na-Salz)

werden durch Zugabe von 0,29 kg Borsäure und 1,82 kg $LiNO_3$ gelöst. Die Lösung enthält dann ca. 8 % Reinfarbe. Diese Lösung wird bei Raumtemperatur, einem pH-Wert von 7,5 und einem Druck von 40 bar auf einem Platten-Rahmen-Modul entsalzt.

Hierzu werden 111,2 kg salzhaltiges Permeat kontinuierlich durch 111,2 kg entmineralisiertes Wasser

ersetzt und anschließend durch Entfernen von 30,1 kg salzhaltigem Permeat aufkonzentriert. 25,5 kg Konzentrat werden mit 1,46 kg entmineralisiertem Wasser versetzt und mit 0,14 kg Borsäure gepuffert.

Man erhält eine niedrigviskose, lagerstabile Flüssigeinstellung des Farbstoffs der Formel (III) mit ca. 16 % Reinfarbe, 0,5 % Borsäure, 2 % Dicyandiamid und Wasser ad 100 %. Der pH-Wert der Einstellung beträgt 7,5; $Cl^-$-Gehalt: < 0,05 %.

Die Filtrationsstromdichte

$$\left[ J = \frac{kg}{m^2 \cdot d} \right] \text{ war bei}$$

diesem Beispiel erheblich höher als beim gleichen Beispiel ohne Zusatz von Borsäure vor der Druckpermeation.

Beispiel 4

189 kg Reaktionssuspension des Farbstoffs der Formel

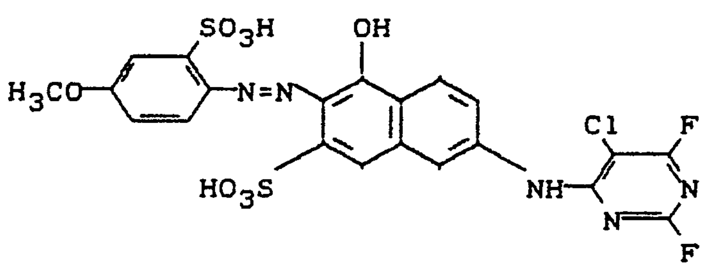

(IV)

(als Li/Na-Salz)

werden mit 1 kg Borsäure versetzt. Die Suspension enthält dann neben Borsäure und Prozeßsalzen 5,3 % Reinfarbstoff.

Diese Suspension wird bei einer Temperatur von ca. 45° C, einem pH von 7,5 und einem Druck von 30 bar auf einem Tubularmodul entsalzt. Hierbei werden 760 kg salzhaltiges Permeat kontinuierlich durch 760 kg entmineralisiertes Wasser ersetzt und anschließend durch Entfernen von 95 kg salzhaltigem Permeat aufkonzentriert. Als Membran wird eine handelsübliche Composite-Membran (Trägerschicht: Polysulfon, Membranschicht: Polyamid) verwendet.

95 kg Konzentrat werden mit 2 kg Dicyandiamid und 2,5 kg entmineralisiertem Wasser versetzt und mit 0,5 kg Borsäure gepuffert.

Man erhält eine niedrigviskose, lagerstabile Flüssigeinstellung des Farbstoffs der Formel (IV) mit ca. 10 % Reinfarbe, 2 % Dicyandiamid, 0,5 % Borsäure und Wasser ad 100 %. Der pH-Wert der Einstellung beträgt 7,5; Cl-Gehalt: <0,05 %.

Die Filtrationsstromdichte

$$\left[ J = \frac{kg}{m^2 \cdot d} \right] \text{ war bei}$$

diesem Beispiel erheblich höher als beim gleichen Beispiel ohne Zusatz von Borsäure vor der Druckpermeation.

**Patentansprüche**

1. Verfahren zur Herstellung von lagerstabilen, wäßrigen Lösungen von anionischen Farbstoffen, vorzugsweise Reaktivfarbstoffen durch Druckpermeation von Lösungen oder Suspensionen des Rohfarbstoffs, dadurch gekennzeichnet, daß die Lösung oder Suspension vor oder während der Druckpermeation, die die Schritte Entsalzung und gegebenenfalls Aufkonzentration umfaßt, mit Borsäure oder deren Salzen versetzt wird.

2. Verfahren nach Anspruch 1, dadurch gekennzeichnet, daß die Lösung oder Suspension vor oder während des Entsalzungsschrittes mit Borsäure oder deren Salzen versetzt wird.

3. Verfahren nach Anspruch 1 und 2, dadurch gekennzeichnet, daß Alkali-, Erdalkali- und/oder Ammoniumsalze der Borsäure und/oder Trialkylammoniumsalze der Borsäure, deren Kation der Formel

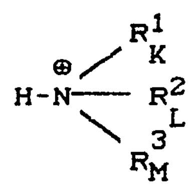

mit

$R^1$ = $C_1$-$C_4$-Alkyl

$R^2$ = $-(CH_2-CH_2-O)_nH$

$R^3$ = -

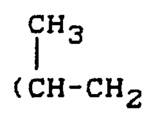

$-O)_nH$ oder $-(CH_2$

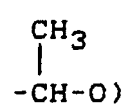

$)_nH$

K = 0 bis 2

L = 0 bis 3

M = 0 bis 3

K + L + M = 3

n = 1 bis 4

entspricht,

eingesetzt werden.

4. Verfahren nach Anspruch 1 bis 3, dadurch gekennzeichnet, daß die Lösung oder Suspension vor der Druckpermeation mit Borsäure oder deren Salzen in Konzentrationen zwischen 0,01 und 10 Gew,-% versetzt wird.

5. Verfahren nach Anspruch 1 bis 4, dadurch gekennzeichnet, daß anionische Reaktivfarbstoffe in Form ihrer Alkalisalze eingesetzt werden, wobei ein Teil der Alkaliionen als Lithium vorliegt.

6. Verfahren nach Anspruch 1 bis 5, dadurch gekennzeichnet, daß Reaktivfarbstoffe der Fluortriazin und Fluorchlorpyrimidinreihe eingesetzt werden.

7. Verfahren nach Anspruch 1-6, dadurch gekennzeichnet, daß die lagerstabilen, wärßigen Farbstofflösungen einen Farbstoffgehalt von 10-30 Gew.-% aufweisen.